(19) **Europäisches Patentamt European Patent Office Office européen des brevets**

(11) **EP 4 239 709 A1**

(12) **EUROPEAN PATENT APPLICATION**
published in accordance with Art. 153(4) EPC

(43) Date of publication:
06.09.2023 Bulletin 2023/36

(21) Application number: 21886390.0

(22) Date of filing: 29.10.2021

(51) International Patent Classification (IPC):
$H01M\ 4/13^{(2010.01)}$     $H01M\ 4/36^{(2006.01)}$
$H01M\ 4/38^{(2006.01)}$     $H01M\ 4/485^{(2010.01)}$
$H01M\ 4/587^{(2010.01)}$     $H01M\ 10/052^{(2010.01)}$

(52) Cooperative Patent Classification (CPC):
H01M 4/13; H01M 4/36; H01M 4/38; H01M 4/485;
H01M 4/587; H01M 10/052; Y02E 60/10

(86) International application number:
PCT/JP2021/040054

(87) International publication number:
WO 2022/092273 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.10.2020 JP 2020182424

(71) Applicant: Panasonic Intellectual Property
Management Co., Ltd.
Osaka-shi, Osaka 540-6207 (JP)

(72) Inventors:
• GOSHIMA, Yuji
Osaka-shi, Osaka 540-6207 (JP)
• KURODA, Yuta
Osaka-shi, Osaka 540-6207 (JP)
• NIINA, Fumiharu
Osaka-shi, Osaka 540-6207 (JP)
• SASA, Tatsuro
Osaka-shi, Osaka 540-6207 (JP)

(74) Representative: Novagraaf International SA
Chemin de l'Echo 3
1213 Onex, Geneva (CH)

(54) **NONAQUEOUS ELECTROLYTE SECONDARY BATTERY**

(57) A nonaqueous electrolyte secondary battery according to one embodiment of the present disclosure is provided with a positive electrode, a negative electrode and a nonaqueous electrolyte, while being characterized in that: the negative electrode comprises a negative electrode active material that contains an Si-containing material; the Si-containing material contains a first Si-containing material which comprises a silicate phase and silicon particles that are dispersed in the silicate phase, and a second Si-containing material which comprises a carbon phase and silicon particles that are dispersed in the carbon phase; and the difference between the initial charge/discharge efficiency (Efc) of the positive electrode and the initial charge/discharge efficiency (Efa) of the negative electrode, namely (Efc - Efa) satisfies 1% < (Efc - Efa) < 8%.

EP 4 239 709 A1

**Description**

TECHNICAL FIELD

The present disclosure relates to a non-aqueous electrolyte secondary battery.

BACKGROUND

Si-containing materials are currently attracting attention as high capacity-imparting materials. Each Si-containing material is a material capable of electrochemically storing and releasing lithium ions, and can charge and discharge a much larger capacity than graphite materials.

For example, Patent Literature 1 discloses a non-aqueous electrolyte secondary battery including a negative electrode including a Si-containing material and a non-aqueous electrolytic solution containing lithium hexafluorophosphate and having an acid content of greater than or equal to 50 ppm and less than or equal to 200 ppm, wherein the negative electrode has a potential of greater than or equal to 0.6 V and less than or equal to 1.5 V with respect to a Li electrode at an end-of-discharge voltage of the battery.

CITATION LIST

PATENT LITERATURE

Patent Literature 1: JP 2007-27084 A

SUMMARY

TECHNICAL PROBLEM

Meanwhile, the Si-containing material can increase the capacity of the non-aqueous electrolyte secondary battery, but has a problem with deterioration of charge/discharge cycle characteristics. The technology in Patent Literature 1 makes it possible to suppress deterioration of charge/discharge cycle characteristics of a non-aqueous electrolyte secondary battery using a Si-containing material. However, further improvement is desired.

Therefore, the purpose of the present disclosure is to suppress deterioration of charge/discharge cycle characteristics in a non-aqueous electrolyte secondary battery having a negative electrode active substance containing a Si-containing material.

SOLUTION TO PROBLEM

A non-aqueous electrolyte secondary battery according to an aspect of the present disclosure includes a positive electrode, a negative electrode, and a non-aqueous electrolyte, wherein the negative electrode includes a negative electrode active substance containing an Si-containing material; the Si-containing material includes a first Si-containing material including a silicate phase and silicon particles dispersed in the silicate phase, and a second Si-containing material including a carbon phase and silicon particles dispersed in the carbon phase; and an initial charge/discharge efficiency (Efc) of the positive electrode and an initial charge/discharge efficiency (Efa) of the negative electrode have a difference (Efc - Efa) of 1% < (Efc - Efa) < 8%.

ADVANTAGEOUS EFFECTS OF INVENTION

According to one aspect of the present disclosure, deterioration of charge/discharge cycle characteristics can be suppressed in a non-aqueous electrolyte secondary battery having a negative electrode active substance containing a Si-containing material.

BRIEF DESCRIPTION OF DRAWINGS

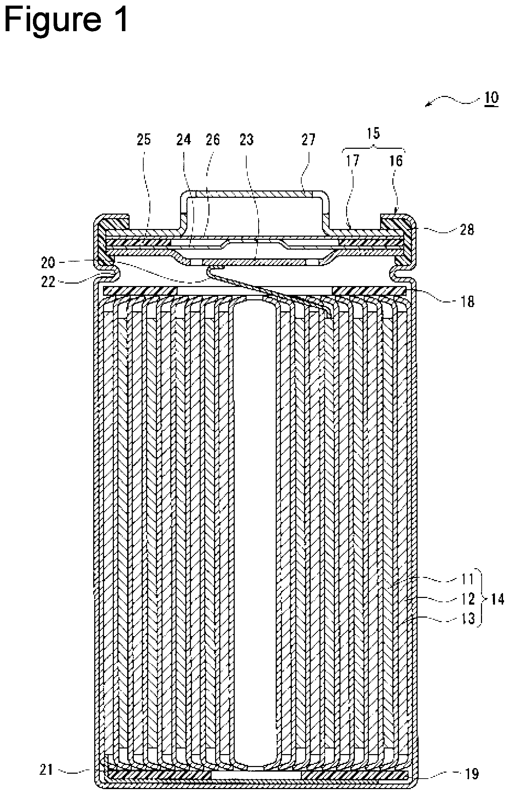

FIG. 1 is a cross-sectional view of a non-aqueous electrolyte secondary battery as an example of an embodiment.

DESCRIPTION OF EMBODIMENTS

A non-aqueous electrolyte secondary battery according to an aspect of the present disclosure includes a positive electrode, a negative electrode, and a non-aqueous electrolyte, wherein the negative electrode includes a negative electrode active substance containing an Si-containing material; the Si-containing material includes a first Si-containing material including a silicate phase and silicon particles dispersed in the silicate phase, and a second Si-containing material including a carbon phase and silicon particles dispersed in the carbon phase; and an initial charge/discharge efficiency (Efc) of the positive electrode and an initial charge/discharge efficiency (Efa) of the negative electrode have a difference (Efc - Efa) of 1% < (Efc - Efa) < 8%. Then, according to the non-aqueous electrolyte secondary battery according to an aspect of the present disclosure, it is possible to suppress deterioration of charge/discharge cycle characteristics. Although the mechanism of achieving the above effect is unclear, the following is speculated. The non-aqueous electrolyte secondary battery includes, on a negative electrode, a first Si-containing material having a silicate phase and silicon particles dispersed in the silicate phase and a second Si-containing material having a carbon phase and silicon particles dispersed in the carbon phase, wherein (Efc - Efa) satisfies a range of 1% < (Efc - Efa) < 8%. The second Si-containing material is selectively used for discharge in a region where the potential increase at the end of discharge on the negative electrode is large. Use of the first Si-containing material that is likely to deteriorate is restricted. Therefore, it is considered that the progress of deterioration of the first Si-containing material is suppressed, and deterioration of charge/discharge cycle characteristics is suppressed. Here, the initial charge/discharge efficiency (Efc) of the positive electrode and the initial charge/discharge efficiency (Efa) of the negative electrode mean a rate of the initial discharge capacity to the initial charge capacity when a monopolar cell using a positive electrode or a negative electrode as a working electrode and metal lithium as a counter electrode is charged and discharged under predetermined conditions. The method for producing a monopolar cell and the conditions for charging and discharging are described in the section of Examples.

Hereinafter, an example of an embodiment will be described in detail with reference to the Drawings. Note that the non-aqueous electrolyte secondary battery of the present disclosure is not limited to the embodiment described below. In addition, the figures referred to in the Description of Embodiments are schematically illustrated.

FIG. 1 is a cross-sectional view of a non-aqueous electrolyte secondary battery as an example of an embodiment. The non-aqueous electrolyte secondary battery 10 shown in FIG. 1 includes a winding-type electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 housing the above-mentioned members. The battery case 15 includes a bottomed cylindrical case body 16 and a sealing assembly 17 that closes a case body 16 opening. Note that instead of the winding-type electrode assembly 14, it is possible to use another form of electrode assembly such as a stacking-type electrode assembly in which a positive electrode and a negative electrode are alternately stacked with a separator interposed therebetween. Here, examples of the battery case 15 include a metal exterior can having, for instance, a cylindrical shape, a square shape, a coin shape, or a button shape, or a pouch exterior body formed by laminating a resin sheet and a metal sheet.

The case body 16 is, for example, a bottomed cylindrical metal exterior can. A gasket 28 is provided between the case body 16 and the sealing assembly 17 to secure the sealing property inside the battery. The case body 16 has, for example, a projecting portion 22 which supports the sealing assembly 17 and has part of lateral side projecting inwardly. The projecting portion 22 is preferably formed in an annular shape along the circumferential direction of the case body 16, and supports the sealing assembly 17 on the upper surface thereof.

The sealing assembly 17 is structured by layering, in sequence from the electrode assembly 14 side, a filter 23, a lower vent member 24, an insulating member 25, an upper vent member 26, and a cap 27. Each member constituting the sealing assembly 17 has, for example, a disk shape or a ring shape, and the respective members excluding the insulating member 25 are electrically connected to each other. The lower vent member 24 and the upper vent member 26 are connected to each other at the respective center regions, and the insulating member 25 is interposed between the respective peripheral portions. The internal pressure of the non-aqueous electrolyte secondary battery 10 may be increased by heat generated due to, for instance, an internal short circuit. In this case, for example, the lower vent member 24 is deformed and broken so as to elevate the upper vent member 26 toward the cap 27. This shuts down a current path between the lower vent member 24 and the upper vent member 26. When the internal pressure further increases, the upper vent member 26 is broken, and the gas is discharged from the cap 27 opening.

In the non-aqueous electrolyte secondary battery 10 shown in FIG. 1, a positive electrode lead 20 attached to the positive electrode 11 extends to the sealing assembly 17 side through a through hole of the insulating plate 18; and a negative electrode lead 21 attached to the negative electrode 12 extends to the bottom side of the case body 16 through the outside of the insulating plate 19. The positive electrode lead 20 is connected to a lower surface of the filter 23, which is a bottom plate of the sealing assembly 17, by welding or other technique. The cap 27, which is a top plate of the sealing assembly 17 electrically connected to the filter 23, serves as a positive electrode terminal. The negative electrode lead 21 is connected to the bottom inner surface of the case body 16 by welding or other technique, and the case body 16 serves as a negative electrode terminal.

Hereinafter, each component of the non-aqueous electrolyte secondary battery 10 will be described in detail.

[Negative electrode]

The negative electrode 12 includes a negative electrode current collector made of, for example, metal foil and a negative electrode mixture layer formed on the current collector. As the negative electrode current collector, it is possible to use, for example, a foil of metal (e.g., copper), which is stable in a potential range of the negative electrode, or a film in which the metal is disposed on a surface layer. The negative electrode mixture layer contains a negative electrode active substance containing a Si-containing material. The negative electrode mixture layer preferably contains, for instance, a binder and/or a conductive agent.

Here, a negative electrode 12 mixture slurry containing, for instance, a negative electrode active substance, a binder, and a conductive agent may be prepared; the negative electrode mixture slurry may be applied onto a negative electrode current collector and dried to form a negative electrode mixture layer; and this negative electrode mixture layer may then be compressed at a compression step by using, for instance, a rolling roller to produce the negative electrode 12.

The Si-containing material contained in the negative electrode mixture layer includes: a first Si-containing material containing a silicate phase and silicon particles dispersed in the silicate phase; and a second Si-containing material containing a carbon phase and silicon particles dispersed in the carbon phase.

For example, deterioration of the charge/discharge cycle characteristics of a battery should be suppressed or the capacity of a battery should be made higher. In view of the above, preferable examples of the first Si-containing material include a Si-containing material having a sea-island structure in which fine silicon particles are substantially uniformly dispersed in an amorphous silicate phase, the material being represented by a general formula $SiO_x$ ($0.5 \leq x \leq 1.6$). The content of the silicon particles is, for example, preferably greater than or equal to 30 mass% and less than or equal to 80 mass%, preferably greater than or equal to 35 mass% and less than or equal to 75 mass%, and more preferably greater than or equal to 55 mass% and less than or equal to 70 mass% based on the total mass of the first Si-containing material from the viewpoint of, for instance, increasing the capacity of the battery. In addition, the average particle diameter of the silicon particles is generally less than or equal to 500 nm, preferably less than or equal to 200 nm, and more preferably less than or equal to 50 nm before charging and discharging. After charging and discharging, the average particle diameter is preferably less than or equal to 400 nm and more preferably less than or equal to 50 nm. The average particle diameter of the silicon particles is measured by observing a particle cross section of the first Si-containing material while using a scanning electron microscope (SEM) or a transmission electron microscope (TEM). Specifically, the longest diameters of 100 silicon particles are averaged.

The silicate phase of the first Si-containing material preferably contains an alkali metal element and/or an alkaline earth metal element, for example, from the viewpoint of improving lithium ion conductivity. In particular, it is preferable to contain a lithium element. In addition, the silicate phase of the first Si-containing material preferably contains lithium silicate represented by a general formula $Li_{2z}SiO_{(2+z)}$ ($0 < z < 2$).

For a suitable second Si-containing material, deterioration of the charge/discharge cycle characteristics of a battery should be suppressed or the capacity of a battery should be made higher. In view of the above, the carbon phase of the second Si-containing material is preferably free of crystalline carbon. The content of the silicon particles in the second Si-containing material is, for example, preferably greater than or equal to 30 mass% and less than or equal to 80 mass%, preferably greater than or equal to 35 mass% and less than or equal to 75 mass%, and more preferably greater than or equal to 55 mass% and less than or equal to 70 mass% based on the total mass of the second Si-containing material from the viewpoint of, for instance, increasing the capacity of the battery. In addition, the average particle diameter of the silicon particles is generally less than or equal to 500 nm, preferably less than or equal to 200 nm, and more preferably less than or equal to 100 nm before charging and discharging. After charging and discharging, the average particle diameter is preferably less than or equal to 400 nm and more preferably less than or equal to 100 nm.

A conductive layer made of highly conductive material may be formed on the particle surface of the first Si-containing material and/or the second Si-containing material. Preferable examples of the conductive layer include a carbon film made of carbon material. The carbon film is made of, for example, carbon black, acetylene black, Ketjenblack, graphite, or a mixture of two or more kinds thereof. Examples of a process for coating the surfaces of particles of the Si-containing material with carbon include: a CVD process using, for instance, acetylene or methane; or a process in which coal pitch, petroleum pitch, or a phenol resin, for instance, is mixed with the particles of the Si-containing material and the resulting mixture is heated. In addition, the carbon film may be formed by fixing carbon powder (e.g., carbon black) to the particle surface while using a binder.

The mass ratio of the second Si-containing material to the first Si-containing material (mass of the second Si-containing material/mass of the first Si-containing material) is, for example, preferably greater than or equal to 0.2 and less than or equal to 20, and more preferably greater than or equal to 2 and less than or equal to 10 from the viewpoint of, for instance, suppressing the deterioration of charge/discharge cycle characteristics.

The total content of the Si-containing material is preferably greater than or equal to 5% by mass and less than or equal to 20% by mass, and more preferably greater than or equal to 10% by mass and less than or equal to 15% by mass based on the total mass of the negative electrode active substance from the viewpoint of, for instance, suppressing the deterioration of charge/discharge cycle characteristics and increasing the capacity of the battery.

The negative electrode active substance may contain, in addition to the above-described Si-containing material, for example, a known material capable of storing and releasing lithium ions. It is preferable to use, as a material contained in addition to the above-described Si-containing material, a carbon material from the viewpoint of, for instance, suppressing the deterioration of charge/discharge cycle characteristics. Particularly preferred are graphite particles. The graphite particles are not particularly limited, and may be natural graphite or artificial graphite. The plane spacing ($d_{002}$) of the (002) plane of the graphite particles as measured by wide angle X-ray diffractometry is, for example, preferably greater than or equal to 0.3354 nm and more preferably greater than or equal to 0.3357 nm, and preferably less than 0.340 nm and more preferably less than or equal to 0.338 nm. In addition, the crystallite size (Lc(002)) of the graphite particles as determined by X-ray diffractometry is, for example, preferably greater than or equal to 5 nm and more preferably greater than or equal to 10 nm, and preferably less than or equal to 300 nm and more preferably less than or equal to 200 nm. When the plane spacing ($d_{002}$) and the crystallite size (Lc(002)) each satisfy the above range, the battery capacity of the secondary battery tends to be larger than when the above range is not satisfied.

The content of the graphite particles is preferably greater than or equal to 80 mass% and less than or equal to 90 mass% based on the total mass of the negative electrode active substance from the viewpoint of, for instance, increasing the capacity of the secondary battery and improving the charge/discharge cycle characteristics.

Examples of the binder include a fluorine-based resin, PAN, a polyimide-based resin, an acryl-based resin, a polyolefin-based resin, a styrene-butadiene rubber (SBR), carboxymethyl cellulose (CMC) or a salt thereof, polyacrylic acid (PAA) or a salt thereof (e.g., PAA-Na, PAA-K; may also be a partially neutralized salt), or polyvinyl alcohol (PVA). They may be used singly or two or more kinds thereof may be used in combination.

Examples of the conductive agent include carbon-based particles such as carbon black (CB), acetylene black (AB), Ketjenblack, carbon nanotube (CNT), or graphite. They may be used singly or two or more kinds thereof may be used in combination.

[Positive electrode]

The positive electrode 11 includes, for example, a positive electrode current collector (e.g., a metal foil) and a positive electrode mixture layer formed on the positive electrode current collector. As the positive electrode current collector, it is possible to use, for example, a foil of metal (e.g., aluminum), which is stable in a potential range of the positive electrode, or a film in which the metal is disposed on a surface layer. The positive electrode mixture layer includes, for example, a positive electrode active substance, a binder, and a conductive agent.

A positive electrode mixture slurry containing, for instance, a positive electrode active substance, a binder, and a conductive agent may be applied onto a positive electrode current collector and dried to form a positive electrode mixture layer; and this positive electrode mixture layer may then be compressed at a compression step by using, for instance, a rolling roller to produce the positive electrode 11.

It is possible to use, as the positive electrode active substance, for example, a lithium transition metal composite oxide. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, or W. Among them, it is preferable to contain at least one of Ni, Co, or Mn. Examples of a suitable lithium transition metal composite oxide include a composite oxide represented by a general formula: $LiMO_2$ (where M is Ni and X, X is a metal element other than Ni, and the ratio of Ni is greater than or equal to 50 mol% and less than or equal to 95 mol% based on the total number of moles of the metal element except Li). Examples of X in the above formula include Co, Mn, Al, B, Mg, Ti, V, Cr, Fe, Cu, Zn, Ga, Sr, Zr, Nb, In, Sn, Ta, or W.

Examples of the conductive agent include carbon-based particles such as carbon black (CB), acetylene black (AB), Ketjenblack, carbon nanotube (CNT), or graphite. They may be used singly or two or more kinds thereof may be used in combination.

Examples of the binder include a fluorine-based resin (e.g., polytetrafluoroethylene (PTFE), polyvinylidene fluoride (PVdF)), polyacrylonitrile (PAN), a polyimide-based resin, an acryl-based resin, or a polyolefin-based resin. They may be used singly or two or more kinds thereof may be used in combination.

[Initial charge/discharge efficiency (Efc) of positive electrode and initial charge/discharge efficiency (Efa) of negative electrode]

In this embodiment, the difference (Efc-Efa) between the initial charge/discharge efficiency (Efc) of the positive electrode 11 and the initial charge/discharge efficiency (Efa) of the negative electrode 12 is 1% < Efc-Efa < 8%, and preferably 2% ≤ Efc-Efa ≤ 6%. Here, Efc-Efa may satisfy the range of 1% < Efc-Efa < 8%; and the negative electrode 12 may contain a first Si-containing material and a second Si-containing material. In this case, the second Si-containing material is selectively used for discharge in a region where the potential increase at the end of discharge on the negative electrode 12 is large. Use of the first Si-containing material that is likely to deteriorate is restricted. Therefore, it is considered that the progress of deterioration of the first Si-containing material is suppressed, and deterioration of charge/discharge cycle characteristics is suppressed. Note that when Efc-Efa is less than or equal to 1, it is difficult to obtain the effect of suppressing the deterioration of the charge/discharge cycle characteristics. This seems to be because elution of, for instance, Ni, Co, Al, and/or Mn from the positive electrode occurs in a region where the potential decrease at the end of discharge on the positive electrode 11 is large, and the Ni, Co, Al, and/or Mn are precipitated on the negative electrode plate, so that deterioration of the negative electrode is accelerated. Note that when Efc-Efa is greater than or equal to 8, it is difficult to obtain the effect of suppressing the deterioration of the charge/discharge cycle characteristics. This seems to be because both the first Si-containing material and the second Si-containing material are used for discharge in a region where the potential increase at the end of discharge on the negative electrode 12 is large, so that the deterioration of the first Si-containing material proceeds.

In this embodiment, Efc-Efa should satisfy the range of 1% < Efc-Efa < 8%. To achieve this, it is better, for example, to adjust the initial charge/discharge efficiency of the negative electrode 12 than to adjust the initial charge/discharge efficiency of the positive electrode 11. The initial charge/discharge efficiency of the negative electrode 12 is adjusted, for example, by adjusting the content ratio, composition, and other factors of the first Si-containing material and/or the second Si-containing material. The initial charge/discharge efficiency of the positive electrode 11 and the initial charge/discharge efficiency of the negative electrode 12 are each preferably greater than or equal to 85% from the viewpoint of, for instance, suppressing the deterioration of the charge/discharge cycle characteristics.

[Separator]

It is possible to use, as the separator 13, for example, a porous sheet having ion permeability and insulating property. Specific examples of the porous sheet include a microporous thin film, a woven fabric, or a nonwoven fabric. Examples of a suitable material for the separator include an olefin-based resin (e.g., polyethylene, polypropylene) or cellulose. The separator 13 may be a laminate including a cellulose fiber layer and a thermoplastic resin (e.g., an olefin-based resin) fiber layer. In addition, the separator may be a multilayer separator including a polyethylene layer and a polypropylene layer. Alternatively, a separator having a surface coated with a material (e.g., an aramid-based resin, ceramic) may be used.

[Non-aqueous electrolyte]

The non-aqueous electrolyte contains a non-aqueous solvent and an electrolyte salt dissolved in the non-aqueous solvent. The non-aqueous electrolyte is not limited to a liquid electrolyte (electrolytic solution), and may be a solid electrolyte using, for instance, a gel polymer. The non-aqueous solvent used may be, for example, an ester compound, an ether compound, a nitrile compound (e.g., acetonitrile), an amide compound (e.g., dimethylformamide) or a solvent obtained by mixing two or more compounds thereof. The non-aqueous solvent may contain a halogen-substituted product in which at least part of hydrogen in each solvent is substituted with a halogen atom such as fluorine.

Examples of the ester compound include: a cyclic carbonate ester (e.g., ethylene carbonate (EC), propylene carbonate (PC), butylene carbonate); a chain carbonate ester (e.g., dimethyl carbonate (DMC), ethyl methyl carbonate (EMC), diethyl carbonate (DEC), methyl propyl carbonate, ethyl propyl carbonate, methyl isopropyl carbonate); a cyclic carboxylic acid ester (e.g., $\gamma$-butyrolactone, $\gamma$-valerolactone); or a chain carboxylic acid ester (e.g., methyl acetate, ethyl acetate, propyl acetate, methyl propionate (MP), ethyl propionate, $\gamma$-butyrolactone).

Examples of the ether compound include: a cyclic ether compound (e.g., 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, crown ether); or a chain ether compound (e.g., 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, tetraethylene glycol dimethyl).

As the halogen-substituted product, it is preferable to use a fluorinated cyclic carbonic acid ester (e.g., fluoroethylene carbonate (FEC)), a fluorinated chain carbonic acid ester, or a fluorinated chain carboxylic acid ester (e.g., methyl fluoropropionate (FMP)).

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (where $1 < x < 6$ and n is 1 or 2), $LiB_{10}Cl_{10}$, LiCl, LiBr, LiI, chloroborane lithium, lower aliphatic lithium carboxylate, a borate compound (e.g., $Li_2B_4O_7$, $Li(B(C_2O_4)F_2)$), or an imide salt compound (e.g., $LiN(SO_2CF_3)_2$, $LiN(C_1F_{2l+1}SO_2)(C_mF_{2m+1}SO_2)$ {where l and m are integers of 1 or more.}. These lithium salts may be used singly or a plurality of kinds thereof may be mixed and used. Among them, $LiPF_6$ is preferably used from the viewpoint of, for instance, ion conductivity and electrochemical stability.

The concentration of the lithium salt is preferably greater than or equal to 0.8 mol and less than or equal to 1.8 mol per L of the solvent.

EXAMPLES

Hereinafter, the present disclosure will be further described with reference to Examples. The present disclosure, however, is not limited to these Examples.

<Example 1>

[To prepare negative electrode]

Graphite particles, a first Si-containing material having silicon particles dispersed in a silicate phase, and a second Si-containing material having silicon particles dispersed in a carbon phase were mixed at a mass ratio of 94.2 : 2.8 : 3. This mixture was used as a negative electrode active substance. Then, the negative electrode active substance, carboxymethylcellulose-sodium (CMC-Na), and styrene-butadiene copolymer rubber (SBR) were mixed at a mass ration of 100 : 1 : 1, and the mixture was admixed with given water to prepare a negative electrode mixture slurry. This slurry was applied onto both surfaces of a current collector made of a copper foil; the resulting coating film was dried, compressed with a rolling roller, and then dried to produce a negative electrode having a negative electrode mixture layer formed on both surfaces of the negative electrode current collector.

[To prepare positive electrode]

A lithium transition metal composite oxide having a composition of $LiNi_{0.88}Co_{0.09}Al_{0.03}O_2$ was used as a positive electrode active substance. Acetylene black was used as a conductive agent, and polyvinylidene fluoride was used as a binder. They were mixed at a mass ratio of 100 : 1 : 1. Thereafter, N-methyl -2 pyrrolidone (NMP) was added to prepare a positive electrode mixture slurry. This slurry was applied onto both surfaces of an aluminum foil. The resulting coating film was dried and then rolled with a rolling roller to produce a positive electrode having a positive electrode mixture layer formed on both surfaces of a positive electrode current collector.

[To prepare non-aqueous electrolyte]

Ethylene carbonate (EC), methyl ethylene carbonate (MEC), and dimethyl carbonate (DMC) were mixed at a volume ratio of 20 : 5 : 75 to prepare a non-aqueous solvent. $LiPF_6$ was dissolved at a concentration of 1.4 mol/L in this solvent. Further, 3% by mass of vinylene carbonate (VC) and 0.5% by mass of 1,6 diisocyanate hexane were added to prepare a non-aqueous electrolyte.

[To produce monopolar cell]

The negative electrode was punched into a predetermined size, and the negative electrode mixture layer on one side was peeled off. ANi lead was pressure-bonded to this negative electrode, and this was used as a working electrode. In addition, a Ni lead was pressure-bonded to metal lithium sufficiently larger than the negative electrode, and this was used as a counter electrode. The working electrode and the counter electrode were opposed to each other with a polyethylene separator interposed therebetween to produce an electrode assembly. This electrode assembly was covered with an aluminum-laminated bag. The non-aqueous electrolyte was injected into the aluminum-laminated bag. Then, while the pressure is reduced, the aluminum-laminated bag opening was sealed by heat welding. In this way, a monopolar cell using the negative electrode as a working electrode was produced. In addition, a monopolar cell using the positive electrode as a working electrode was likewise produced.

The monopolar cell having the negative electrode as a working electrode was charged at a constant current of 0.1 C under an environment at a temperature of 25°C until the battery voltage reached 0.005 V Next, the battery was charged at a constant current of 0.05 C until the battery voltage reached 0.005 V Then, the battery was charged at a constant current of 0.01 C until the battery voltage reached 0.005 V. Thereafter, the battery was discharged at a constant current of 0.1 C until the battery voltage reached 1 V Next, the battery was discharged at a constant current of 0.05 C until the battery voltage reached 1 V. Then, the battery was discharged at a constant current of 0.01 C until the battery voltage reached 1 V. Subsequently, the initial charge capacity and the initial discharge capacity were measured. These values were assigned to the following equation to calculate an initial charge/discharge efficiency. This was defined as the initial charge/discharge efficiency (Efa) of the negative electrode.

$$\text{Initial charge/discharge efficiency (\%)} = \text{(Initial discharge capacity/Initial charge}$$

$$\text{capacity)} \times 100.$$

The monopolar cell having the positive electrode as a working electrode was charged at a constant current of 0.1 C under an environment at a temperature of 25°C until the battery voltage reached 4.2 V Next, the battery was charged at a constant current of 0.01 C until the battery voltage reached 4.2 V. Then, the battery was discharged at a constant current of 0.1 C until the battery voltage reached 2.5 V. Subsequently, the initial charge capacity and the initial discharge capacity were measured. These values were assigned to the above equation to calculate an initial charge/discharge efficiency. This was defined as the initial charge/discharge efficiency (Efc) of the positive electrode.

In Example 1, the difference between the initial charge/discharge efficiency (Efc) of the positive electrode and the initial charge/discharge efficiency (Efa) of the negative electrode was calculated and found to be 2.7%.

[To produce non-aqueous electrolyte secondary battery]

(1) A lead made of aluminum was welded to the positive electrode. A lead made of nickel-copper-nickel was welded to the negative electrode. Thereafter, the positive electrode and the negative electrode were wound with a polyethylene-made separator interposed therebetween to produce a wound electrode assembly.

(2) An insulating plate was disposed above and below the electrode assembly. The negative electrode lead was welded to the case body, the positive electrode lead was welded to the sealing assembly, and the electrode assembly was housed in the case body.

(3) The non-aqueous electrolyte was injected into the case body by a decompression method. The open end of the case body was crimped via a gasket to the sealing body to produce a non-aqueous electrolyte secondary battery.

[Charge/discharge test]

The non-aqueous electrolyte secondary battery was charged at a constant current of 0.3 C under an environment at a temperature of 25°C until the battery voltage reached 4.2 V Next, the battery was charged at a constant voltage of 4.2 V until the current value reached 0.02 C. Then, the battery was discharged at a constant current of 0.5 C until the battery voltage reached 2.5 V. This was repeated 100 cycles, and the capacity retention rate after 100 cycles was calculated by the following equation.

$$\text{Capacity retention rate (\%)} = \text{(Discharge capacity at cycle 100/Discharge capacity at}$$

$$\text{cycle 1)} \times 100.$$

<Comparative Example 1>

During production of a negative electrode, graphite particles and a first Si-containing material having silicon particles dispersed in a silicate phase were mixed at a mass ratio of 94 : 6. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 1, the difference between the initial charge/discharge efficiency (Efc) of the positive electrode and the initial charge/discharge efficiency (Efa) of the negative electrode was 2%. Further, a non-aqueous electrolyte secondary battery was produced in the same manner as in Example 1 while using the negative electrode produced in Comparative Example 1. The capacity retention rate after 100 cycles was then calculated.

Table 1 collectively provides the results of the capacity retention rate in Example 1 or Comparative Example 1. The value of the capacity retention rate is obtained while the capacity retention rate of Example 1 was set to 100% (reference). The capacity retention rate of Comparative Example 1 is shown as a relative value. Note that when the value of the capacity retention rate was larger, the deterioration of the charge/discharge cycle characteristics was more significantly suppressed than when the value of the capacity retention rate was small.

[Table 1]

| | First Si-containing material + Second Si-containing material | | | | | | First Si-containing material alone or Second Si-containing material alone | | | | |
|---|---|---|---|---|---|---|---|---|---|---|---|
| | First Si-containing material (wt%) | Second Si-containing material (wt%) | Si-containing material Total (wt%) | Efc-Efa | Capacity retention rate after 100 eye (%) | | First Si-containing material (wt%) | Second Si-containing material (wt%) | Si-containing material Total (wt%) | Efc-Efa | Capacity retention rate after 100 eye (%) |
| Example 1 | 2.8 | 3 | 5.8 | 2% | 100.0 | Comparative Example 1 | 6 | 0 | 6 | 2% | 98.7 |

As shown in the results of Table 1, the values of Efc-Efa in Example 1 and Comparative Example 1 were the same and 2%. However, when the capacity retention rate of Example 1 having both the first Si-containing material and the second Si-containing material was 100%, the capacity retention rate of Comparative Example 1 having the first Si-containing material alone was 98.7%. Therefore, it can be said that in Example 1, deterioration of charge/discharge cycle characteristics was suppressed when compared with Comparative Example 1.

<Example 2>

During production of a negative electrode, graphite particles, a first Si-containing material having silicon particles dispersed in a silicate phase, and a second Si-containing material having silicon particles dispersed in a carbon phase were mixed at a mass ratio of 92.7 : 4.3 : 3. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Example 2, the difference between the initial charge/discharge efficiency (Efc) of the positive electrode and the initial charge/discharge efficiency (Efa) of the negative electrode was 4%. Further, a non-aqueous electrolyte secondary battery was produced in the same manner as in Example 1 while using the negative electrode produced in Example 2. The capacity retention rate after 100 cycles was then calculated.

<Comparative Example 2>

During production of a negative electrode, graphite particles and a first Si-containing material having silicon particles dispersed in a silicate phase were mixed at a mass ratio of 92.5 : 7.5. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 2, the difference between the initial charge/discharge efficiency (Efc) of the positive electrode and the initial charge/discharge efficiency (Efa) of the negative electrode was 4%. Further, a non-aqueous electrolyte secondary battery was produced in the same manner as in Example 1 while using the negative electrode produced in Comparative Example 2. The capacity retention rate after 100 cycles was then calculated.

Table 2 collectively provides the results of the capacity retention rate in Example 2 or Comparative Example 2. The value of the capacity retention rate is obtained while the capacity retention rate of Example 2 was set to 100% (reference). The capacity retention rate of Comparative Example 2 is shown as a relative value.

[Table 2]

| | First Si-containing material + Second Si-containing material | | | | | | First Si-containing material alone or Second Si-containing material alone | | | | |
|---|---|---|---|---|---|---|---|---|---|---|---|
| | First Si-containing material (wt%) | Second Si-containing material (wt%) | Si-containing material Total (wt%) | Efc-Efa | Capacity retention rate after 100 eye (%) | | First Si-containing material (wt%) | Second Si-containing material (wt%) | Si-containing material Total (wt%) | Efc-Efa | Capacity retention rate after 100 eye (%) |
| Example 2 | 4.3 | 3 | 7.3 | 4% | 100.0 | Comparative Example 2 | 7.5 | 0 | 7.5 | 4% | 98.5 |

As shown in the results of Table 2, the values of Efc-Efa in Example 2 and Comparative Example 2 were the same and 4%. However, when the capacity retention rate of Example 2 having both the first Si-containing material and the second Si-containing material was 100%, the capacity retention rate of Comparative Example 2 having the first Si-containing material alone was 98.5%. Therefore, it can be said that in Example 2, deterioration of charge/discharge cycle characteristics was suppressed when compared with Comparative Example 2.

<Example 3>

During production of a negative electrode, graphite particles, a first Si-containing material having silicon particles dispersed in a silicate phase, and a second Si-containing material having silicon particles dispersed in a carbon phase were mixed at a mass ratio of 90.2 : 6.8 : 3. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Example 3, the difference between the initial charge/discharge efficiency (Efc) of the positive electrode and the initial charge/discharge efficiency (Efa) of the negative electrode was 6%. Further, a non-aqueous electrolyte secondary battery was produced in the same manner as in Example 1 while using the negative electrode produced in Example 3. The capacity retention rate after 100 cycles was then calculated.

<Comparative Example 3>

During production of a negative electrode, graphite particles and a first Si-containing material having silicon particles dispersed in a silicate phase were mixed at a mass ratio of 90 : 10. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 3, the difference between the initial charge/discharge efficiency (Efc) of the positive electrode and the initial charge/discharge efficiency (Efa) of the negative electrode was 6%. Further, a non-aqueous electrolyte secondary battery was produced in the same manner as in Example 1 while using the negative electrode produced in Comparative Example 3. The capacity retention rate after 100 cycles was then calculated.

Table 3 collectively provides the results of the capacity retention rate in Example 3 or Comparative Example 3. The value of the capacity retention rate is obtained while the capacity retention rate of Example 3 was set to 100% (reference). The capacity retention rate of Comparative Example 3 is shown as a relative value.

[Table 3]

| | First Si-containing material + Second Si-containing material | | | | | | First Si-containing material alone or Second Si-containing material alone | | | | |
|---|---|---|---|---|---|---|---|---|---|---|---|
| | First Si-containing material (wt%) | Second Si-containing material (wt%) | Si-containing material Total (wt%) | Efc-Efa | Capacity retention rate after 100 eye (%) | | First Si-containing material (wt%) | Second Si-containing material (wt%) | Si-containing material Total (wt%) | Efc-Efa | Capacity retention rate after 100 eye (%) |
| Example 3 | 6.8 | 3 | 9.8 | 6% | 100.0 | Comparative Example 3 | 10 | 0 | 10 | 6% | 98.3 |

As shown in the results of Table 3, the values of Efc-Efa in Example 3 and Comparative Example 3 were the same and 6%. However, when the capacity retention rate of Example 3 having both the first Si-containing material and the second Si-containing material was 100%, the capacity retention rate of Comparative Example 3 having the first Si-containing material alone was 98.3%. Therefore, it can be said that in Example 3, deterioration of charge/discharge cycle characteristics was suppressed when compared with Comparative Example 3.

<Example 4>

During production of a negative electrode, graphite particles, a first Si-containing material having silicon particles dispersed in a silicate phase, and a second Si-containing material having silicon particles dispersed in a carbon phase were mixed at a mass ratio of 93.2 : 1.5 : 5.3. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Example 4, the difference between the initial charge/discharge efficiency (Efc) of the positive electrode and the initial charge/discharge efficiency (Efa) of the negative electrode was 3%. Further, a non-aqueous electrolyte secondary battery was produced in the same manner as in Example 1 while using the negative electrode produced in Example 4. The capacity retention rate after 100 cycles was then calculated.

<Comparative Example 4>

During production of a negative electrode, graphite particles and a second Si-containing material having silicon particles dispersed in a carbon phase were mixed at a mass ratio of 94 : 6. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 4, the difference between the initial charge/discharge efficiency (Efc) of the positive electrode and the initial charge/discharge efficiency (Efa) of the negative electrode was 3%. Further, a non-aqueous electrolyte secondary battery was produced in the same manner as in Example 1 while using the negative electrode produced in Comparative Example 4. The capacity retention rate after 100 cycles was then calculated.

Table 4 collectively provides the results of the capacity retention rate in Example 4 or Comparative Example 4. The value of the capacity retention rate is obtained while the capacity retention rate of Example 4 was set to 100% (reference). The capacity retention rate of Comparative Example 4 is shown as a relative value.

[Table 4]

| | First Si-containing material + Second Si-containing material | | | | | | First Si-containing material alone or Second Si-containing material alone | | | | |
| | First Si-containing material (wt%) | Second Si-containing material (wt%) | Si-containing material Total (wt%) | Efc-Efa | Capacity retention rate after 100 eye (%) | | First Si-containing material (wt%) | Second Si-containing material (wt%) | Si-containing material Total (wt%) | Efc-Efa | Capacity retention rate after 100 eye (%) |
|---|---|---|---|---|---|---|---|---|---|---|---|
| Example 4 | 1.5 | 5.3 | 6.8 | 3% | 100.0 | Comparative Example 4 | 0 | 6 | 6 | 3% | 97.9 |

As shown in the results of Table 4, the values of Efc-Efa in Example 4 and Comparative Example 4 were the same and 6%. However, when the capacity retention rate of Example 4 having both the first Si-containing material and the second Si-containing material was 100%, the capacity retention rate of Comparative Example 4 having the second Si-containing material alone was 98.0%. Therefore, it can be said that in Example 4, deterioration of charge/discharge cycle characteristics was suppressed when compared with Comparative Example 4.

<Example 5>

During production of a negative electrode, graphite particles, a first Si-containing material having silicon particles dispersed in a silicate phase, and a second Si-containing material having silicon particles dispersed in a carbon phase were mixed at a mass ratio of 90.7 : 4 : 5.3. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Example 5, the difference between the initial charge/discharge efficiency (Efc) of the positive electrode and the initial charge/discharge efficiency (Efa) of the negative electrode was 6%. Further, a non-aqueous electrolyte secondary battery was produced in the same manner as in Example 1 while using the negative electrode produced in Example 4. The capacity retention rate after 100 cycles was then calculated.

<Comparative Example 5>

During production of a negative electrode, graphite particles and a first Si-containing material having silicon particles dispersed in a silicate phase were mixed at a mass ratio of 90 : 10. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 5, the difference between the initial charge/discharge efficiency (Efc) of the positive electrode and the initial charge/discharge efficiency (Efa) of the negative electrode was 6%. Further, a non-aqueous electrolyte secondary battery was produced in the same manner as in Example 1 while using the negative electrode produced in Comparative Example 5. The capacity retention rate after 100 cycles was then calculated.

Table 5 collectively provides the results of the capacity retention rate in Example 5 or Comparative Example 5. The value of the capacity retention rate is obtained while the capacity retention rate of Example 5 was set to 100% (reference). The capacity retention rate of Comparative Example 5 is shown as a relative value.

[Table 5]

| | First Si-containing material + Second Si-containing material | | | | | | First Si-containing material alone or Second Si-containing material alone | | | | |
| --- | --- | --- | --- | --- | --- | --- | --- | --- | --- | --- | --- |
| | First Si-containing material (wt%) | Second Si-containing material (wt%) | Si-containing material Total (wt%) | Efc-Efa | Capacity retention rate after 100 eye (%) | | First Si-containing material (wt%) | Second Si-containing material (wt%) | Si-containing material Total (wt%) | Efc-Efa | Capacity retention rate after 100 eye (%) |
| Example 5 | 4 | 5.3 | 9.3 | 6% | 100.0 | Comparative Example 5 | 10 | 0 | 10 | 6% | 98.1 |

As shown in the results of Table 5, the values of Efc-Efa in Example 5 and Comparative Example 5 were the same and 6%. However, when the capacity retention rate of Example 5 having both the first Si-containing material and the second Si-containing material was 100%, the capacity retention rate of Comparative Example 5 having the first Si-containing material alone was 98.1%. Therefore, it can be said that in Example 5, deterioration of charge/discharge cycle characteristics was suppressed when compared with Comparative Example 5.

<Comparative Example 6>

During production of a negative electrode, graphite particles, a first Si-containing material having silicon particles dispersed in a silicate phase, and a second Si-containing material having silicon particles dispersed in a carbon phase were mixed at a mass ratio of 97.5 : 0.5 : 2. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 6, the difference between the initial charge/discharge efficiency (Efc) of the positive electrode and the initial charge/discharge efficiency (Efa) of the negative electrode was 0%.
Further, a non-aqueous electrolyte secondary battery was produced in the same manner as in Example 1 while using the negative electrode produced in Comparative Example 6. The capacity retention rate after 100 cycles was then calculated.

<Comparative Example 7>

During production of a negative electrode, graphite particles and a first Si-containing material having silicon particles dispersed in a silicate phase were mixed at a mass ratio of 94 : 6. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 7, the difference between the initial charge/discharge efficiency (Efc) of the positive electrode and the initial charge/discharge efficiency (Efa) of the negative electrode was 0%. Further, a non-aqueous electrolyte secondary battery was produced in the same manner as in Example 1 while using the negative electrode produced in Comparative Example 7. The capacity retention rate after 100 cycles was then calculated.

Table 6 collectively provides the results of the capacity retention rate in Comparative Example 6 or Comparative Example 7. The value of the capacity retention rate is obtained while the capacity retention rate of Comparative Example 6 was set to 100% (reference). The capacity retention rate of Comparative Example 7 is shown as a relative value.

[Table 6]

| | First Si-containing material + Second Si-containing material | | | | |
|---|---|---|---|---|---|
| | First Si-containing material (wt%) | Second Si-containing material (wt%) | Si-containing material Total (wt%) | Efc-Efa | Capacity retention rate after 100 eye (%) |
| Comparative Example 6 | 0.5 | 2 | 2.5 | 0% | 100.0 |

| | First Si-containing material alone or Second Si-containing material alone | | | | |
|---|---|---|---|---|---|
| | First Si-containing material (wt%) | Second Si-containing material (wt%) | Si-containing material Total (wt%) | Efc-Efa | Capacity retention rate after 100 eye (%) |
| Comparative Example 7 | 6 | 0 | 6 | 0% | 99.8 |

The results of Table 6 have demonstrated that when Efc-Efa was 0%, there was almost no change in the capacity retention rate between Comparative Example 6 having both the first Si-containing material and the second Si-containing material and Comparative Example 7 having the first Si-containing material alone. No effects of suppressing the deterioration of charge/discharge cycle characteristics were exerted.

<Comparative Example 8>

During production of a negative electrode, graphite particles, a first Si-containing material having silicon particles dispersed in a silicate phase, and a second Si-containing material having silicon particles dispersed in a carbon phase were mixed at a mass ratio of 91 : 7 : 2. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 8, the difference between the initial charge/discharge efficiency (Efc) of the positive electrode and the initial charge/discharge efficiency (Efa) of the negative electrode was 8%. Further, a non-aqueous electrolyte secondary battery was produced in the same manner as in Example 1 while using the negative electrode produced in Comparative Example 8. The capacity retention rate after 100 cycles was then calculated.

<Comparative Example 9>

During production of a negative electrode, graphite particles and a first Si-containing material having silicon particles dispersed in a silicate phase were mixed at a mass ratio of 92 : 8. Next, a monopolar cell having the negative electrode as a working electrode was produced in the same manner as in Example 1 except that this mixture was used as a negative electrode active substance. The initial charge-discharge efficiency (Efa) of the negative electrode was then calculated. In Comparative Example 9, the difference between the initial charge/discharge efficiency (Efc) of the positive electrode and the initial charge/discharge efficiency (Efa) of the negative electrode was 8%. Further, a non-aqueous electrolyte secondary battery was produced in the same manner as in Example 1 while using the negative electrode produced in Comparative Example 9. The capacity retention rate after 100 cycles was then calculated.

Table 7 collectively provides the results of the capacity retention rate in Comparative Example 8 or Comparative Example 9. The value of the capacity retention rate is obtained while the capacity retention rate of Comparative Example 8 was set to 100% (reference). The capacity retention rate of Comparative Example 9 is shown as a relative value.

[Table 7]

| | First Si-containing material + Second Si-containing material | | | | | | First Si-containing material alone or Second Si-containing material alone | | | | |
|---|---|---|---|---|---|---|---|---|---|---|---|
| | First Si-containing material (wt%) | Second Si-containing material (wt%) | Si-containing material Total (wt%) | Efc-Efa | Capacity retention rate after 100 eye (%) | | First Si-containing material (wt%) | Second Si-containing material (wt%) | Si-containing material Total (wt%) | Efc-Efa | Capacity retention rate after 100 eye (%) |
| Comparative Example 8 | 7 | 2 | 9 | 8% | 100.0 | Comparative Example 9 | 8 | 0 | 8 | 8% | 99.9 |

The results of Table 7 have demonstrated that when Efc-Efa was 8%, there was almost no change in the capacity retention rate between Comparative Example 8 having both the first Si-containing material and the second Si-containing material and Comparative Example 9 having the first Si-containing material alone. No effects of suppressing the deterioration of charge/discharge cycle characteristics were exerted.

REFERENCE SIGNS LIST

| | |
|---|---|
| 10 | Non-aqueous electrolyte secondary battery |
| 11 | Positive electrode |
| 12 | Negative electrode |
| 13 | Separator |
| 14 | electrode assembly |
| 15 | Battery case |
| 16 | Case body |
| 17 | Sealing assembly |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |

**Claims**

1. A non-aqueous electrolyte secondary battery comprising

   a positive electrode, a negative electrode, and a non-aqueous electrolyte, wherein
   the negative electrode comprises a negative electrode active substance containing an Si-containing material;
   the Si-containing material comprises a first Si-containing material comprising a silicate phase and silicon particles dispersed in the silicate phase, and a second Si-containing material comprising a carbon phase and silicon particles dispersed in the carbon phase; and
   an initial charge/discharge efficiency (Efc) of the positive electrode and an initial charge/discharge efficiency (Efa) of the negative electrode have a difference (Efc - Efa) of 1% < (Efc - Efa) < 8%.

2. The non-aqueous electrolyte secondary battery according to claim 1, wherein a mass ratio of the second Si-containing material to the first Si-containing material (mass of the second Si-containing material/mass of the first Si-containing material) is greater than or equal to 0.2 and less than or equal to 20.

3. The non-aqueous electrolyte secondary battery according to claim 1 or 2, wherein the Si-containing material has a content of greater than or equal to 5% by mass and less than or equal to 20% by mass based on a total mass of the negative electrode active substance.

4. The non-aqueous electrolyte secondary battery according to any one of claims 1 to 3, wherein the carbon phase of the second Si-containing material is free of crystalline carbon.

5. The non-aqueous electrolyte secondary battery according to any one of claims 1 to 4, wherein the silicate phase of the first Si-containing material comprises an alkali metal element and/or an alkaline earth metal element.

6. The non-aqueous electrolyte secondary battery according to any one of claims 1 to 5, wherein the silicate phase of the first Si-containing material comprises lithium silicate represented by a general formula $Li_{2z}SiO_{(2+z)}$ ($0 < z < 2$).

# Figure 1

## INTERNATIONAL SEARCH REPORT

| International application No. |
|---|
| **PCT/JP2021/040054** |

**A. CLASSIFICATION OF SUBJECT MATTER**

*H01M 4/13*(2010.01)i; *H01M 4/36*(2006.01)i; *H01M 4/38*(2006.01)i; *H01M 4/485*(2010.01)i; *H01M 4/587*(2010.01)i; *H01M 10/052*(2010.01)i

FI: H01M10/052; H01M4/13; H01M4/36 A; H01M4/38 Z; H01M4/587; H01M4/485

According to International Patent Classification (IPC) or to both national classification and IPC

**B. FIELDS SEARCHED**

Minimum documentation searched (classification system followed by classification symbols)

H01M4/13; H01M4/36; H01M4/38; H01M4/485; H01M4/587; H01M10/052

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-100054 A (NAT INST ADVANCED IND SCIENCE & TECH) 30 May 2016 (2016-05-30)<br> example 2 | 1-5 |
| A | JP 2019-523976 A (ROBERT BOSCH GMBH) 29 August 2019 (2019-08-29)<br> table 1 | 1-5 |
| A | JP 2016-528706 A (LG CHEM, LTD.) 15 September 2016 (2016-09-15)<br> examples 1, 2 | 1-5 |
| A | JP 11-45742 A (TDK CORP) 16 February 1999 (1999-02-16)<br> claim 1, table 1 | 1-5 |
| A | WO 2015/145521 A1 (TOSHIBA KK) 01 October 2015 (2015-10-01)<br> claims | 1-5 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 December 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/040054**

| Patent document cited in search report | | | Publication date (day/month/year) | Patent family member(s) | | | Publication date (day/month/year) |
|---|---|---|---|---|---|---|---|
| JP | 2016-100054 | A | 30 May 2016 | US 2017/0338511 example 2 <br> WO 2016/080128 <br> CN 107112581 | A1 <br><br> A1 <br> A | | |
| JP | 2019-523976 | A | 29 August 2019 | US 2019/0181427 tables P1-E1 <br> WO 2017/214900 <br> CN 109314220 <br> KR 10-2019-0017047 | A1 <br><br> A1 <br> A <br> A | | |
| JP | 2016-528706 | A | 15 September 2016 | US 2016/0197340 examples 1, 2 <br> WO 2015/199384 <br> EP 3016197 <br> KR 10-2016-0001651 <br> CN 105474449 | A1 <br><br> A1 <br> A1 <br> A <br> A | | |
| JP | 11-45742 | A | 16 February 1999 | US 2002/0012841 table 1, claims <br> WO 1998/054778 <br> EP 1009056 <br> AU 7452298 <br> KR 10-0498862 | A1 <br><br> A1 <br> A1 <br> A <br> B1 | | |
| WO | 2015/145521 | A1 | 01 October 2015 | US 2016/0372753 claims | A1 | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007027084 A